# EUROPEAN PATENT APPLICATION

(11) **EP 4 818 702 A1**
(43) Date of publication of application: **07.10.2026**
(21) Application number: 24897163.2
(22) Date of filing: 25.10.2024
(51) Int. Cl.: G01N 35/10

(54) **AUTOMATIC ANALYSIS DEVICE AND DISPENSING METHOD**

(30) Priority: 01.12.2023 JP 2023204054
(71) Applicant: Hitachi High-Tech Corporation, Minato-ku Tokyo 105-6409 (JP)
(72) Inventor: NODA, Kazuhiro, Tokyo 100-8280 (JP); HAMASAKI, Koshin, Tokyo 105-6409 (JP); SHIMADA, Masafumi, Tokyo 105-6409 (JP); MATSUDA, Kyohei, Tokyo 105-6409 (JP); SATO, Yuri, Tokyo 105-6409 (JP)
(74) Representative: MERH-IP Matias Erny Reichl Hoffmann Patentanwälte PartG mbB
(86) International application number: PCT/JP2024/038041
(87) International publication number: WO 2025/115474

(57) **Abstract**

In a case where a plurality of types of liquids are dispensed at the same time, it is possible to detect an abnormality at the time of dispensing a liquid to be subjected to abnormality detection with high accuracy by minimizing a liquid film, a liquid residue, or the like generated at the time of aspirating a liquid to be aspirated before a liquid to be subjected to abnormality detection. An automatic analyzer includes a container that contains a fluid, a pressure source, a probe that dispenses a fluid in the container, and a flow path that connects the probe and the pressure source. The automatic analyzer has a plurality of levels of an aspiration speed at which air is aspirated when the air is aspirated into the probe or when the air is aspirated into a tip attached to a tip end of the probe, and the levels are selectively used according to at least one of a type of the fluid or an aspiration volume of the air.

## Description

### Technical Field

The present invention relates to an automatic analyzer and a dispensing method.

### Background Art

An automatic analyzer such as a clinical chemistry analyzer or an immunoassay analyzer includes a dispensing mechanism that aspirates a predetermined amount of a specimen such as a biological sample and a reagent and that discharges the aspirated specimen and reagent into a reaction container, and an analysis mechanism that analyzes a reaction liquid of the specimen and the reagent.

The dispensing mechanism includes a probe inserted into a liquid such as the specimen or the reagent, a syringe serving as a pressure source for aspiration and discharge of the liquid, and a flow path connecting the probe and the syringe. The dispensing mechanism dispenses a predetermined amount of liquid by inserting the probe into the liquid in a specimen container or a reagent container, operating the syringe and aspirating the predetermined amount of liquid, moving the probe to the reaction container, and discharging the liquid. At the time of dispensing, a disposable tip may be mounted on a tip end of the probe to prevent a component from being carried over to the next inspection.

Depending on an analysis item, a plurality of reagents or both reagents and specimens may be simultaneously held in the probe or the tip (dispensing nozzle) and dispensed into the reaction container. Thus, when a plurality of types of liquids are held in the dispensing nozzle at the same time, the plurality of types of liquids are continuously aspirated, and after all the liquids are aspirated, the liquids are dispensed by being discharged into the reaction container. By dispensing the plurality of types of liquids at the same time, the amount of used cleaning water, the number of used tips, and the time required for dispensing can be reduced.

At the time of dispensing, an abnormality such as aspirating of bubbles generated by handling the specimen container and clogging of the flow path caused by a high-viscosity specimen or fibers such as fibrin in the specimen may occur. Therefore, an accuracy of an analysis result can be improved by accurately estimating a dispensing state and detecting the occurrence of the abnormality with high accuracy.

As a method for executing abnormality detection of dispensing, for example, PTL 1 discloses a technique of detecting a dispensation abnormality using an integral value of pressure data in a specific time interval and a difference between an average pressure calculated at the end of discharge and an average pressure calculated at the time of normal discharge as indices for a pressure fluctuation at the time of discharge of a specimen, and comparing the indices with preset thresholds.

PTL 2 discloses a technique of detecting an abnormality at the time of dispensing a predetermined liquid using a ratio between a pressure at the time of dispensing a reference liquid serving as a reference for abnormality detection and a pressure at the time of dispensing the predetermined liquid.

### Citation List

### Patent Literature

PTL 1: JP3633631B
PTL 2: JPH11-258244A

### Summary of Invention

### Technical Problem

However, as described in PTL 1, in a case where the plurality of types of liquids are simultaneously dispensed, when the aspirating of the liquid to be subjected to the abnormality detection is not the head, the accuracy of the abnormality detection may decrease due to the liquid film, the liquid residue, or the like generated when the preceding liquid is aspirated.

Similar to PTL 1, in PTL 2, in a case where the plurality of types of liquids are simultaneously dispensed, when the aspirating of the liquid to be subjected to the abnormality detection is not the head, the accuracy of the abnormality detection may decrease due to the liquid film, the liquid residue, or the like generated when the preceding liquid is aspirated.

Therefore, the present disclosure provides a technique capable of detecting, when a plurality of types of liquids are simultaneously dispensed, an abnormality at the time of dispensing a liquid to be subjected to abnormality detection with high accuracy by minimizing a liquid film, a liquid residue, or the like generated at the time of aspirating a liquid to be aspirated before a liquid to be subjected to abnormality detection.

### Solution to Problem

An example of an automatic analyzer according to the present invention is an automatic analyzer including:
a container configured to contain a fluid;
a pressure source;
a probe configured to dispense the fluid in the container; and
a flow path connecting the probe and the pressure source, in which
the automatic analyzer has a plurality of levels of an aspiration speed at which air is aspirated when the air is aspirated into the probe or when the air is aspirated into a tip attached to a tip end of the probe, and
the levels are selectively used according to at least one of a type of the fluid or an aspiration volume of the air.

In an example of a fluid dispensing method using an automatic analyzer according to the present invention, the automatic analyzer includes
a container configured to contain a fluid,
a pressure source,
a probe configured to dispense the fluid in the container, and
a flow path connecting the probe and the pressure source,
the automatic analyzer has a plurality of levels of an aspiration speed at which air is aspirated when the air is aspirated into the probe or when the air is aspirated into a tip attached to a tip end of the probe, and
the dispensing method includes selectively using the levels according to at least one of a type of the fluid and an aspiration volume of the air.

Additional features related to the present disclosure will be clarified based on the description of the present description and the accompanying drawings. Aspects of the present disclosure may be achieved and implemented using elements, combinations of various elements, the following detailed description, and accompanying claims.

The description of the present description is merely a typical example, and does not limit the claims or application examples of the present disclosure in any sense.

### Advantageous Effects of Invention

According to the automatic analyzer of the present disclosure, it is possible to detect an abnormality at the time of dispensing a liquid to be subjected to abnormality detection with high accuracy.

Problems, configurations, and effects other than those described above will be clarified by the following description of embodiments.

### Brief Description of Drawings

[FIG. 1] FIG. 1 is a schematic configuration diagram showing a dispensing mechanism of an automatic analyzer according to a first embodiment.
[FIG. 2] FIG. 2 is a flowchart showing a dispensing method according to the first embodiment.
[FIG. 3] FIG. 3 is a flowchart showing a method of determining presence or absence of an abnormality according to the first embodiment.
[FIG. 4] FIG. 4 is a schematic diagram showing a state of a fluid in a probe and a tip in a dispensing operation in FIG. 2.
[FIG. 5] FIG. 5 is a flowchart showing a method of calculating an intake speed of segmented air in the dispensing operation in FIG. 2.
[FIG. 6] FIG. 6 is a schematic configuration diagram showing a dispensing mechanism of an automatic analyzer according to a modification of the first embodiment.
[FIG. 7] FIG. 7 is a flowchart showing a method of calculating an intake speed of segmented air according to a second embodiment.
[FIG. 8] FIG. 8 is a flowchart showing a method of calculating an intake speed of segmented air according to a third embodiment.
[FIG. 9] FIG. 9 is a schematic diagram showing a state of a fluid in a probe according to a fourth embodiment.

### Description of Embodiments

### [First Embodiment]

### <Configuration of Dispensing Mechanism of automatic analyzer>

In a dispensing mechanism of an automatic analyzer according to a first embodiment, a tip is detachably attached to a tip end of a probe. The dispensing mechanism according to the present embodiment detects aspirating of bubbles (hereinafter referred to as "bubble aspiration") or clogging when a reagent and a specimen are sequentially aspirated into a tip and simultaneously dispensed into a reaction container and when the specimen is aspirated in a state in which the reagent is aspirated and held in the tip in advance in this manner.

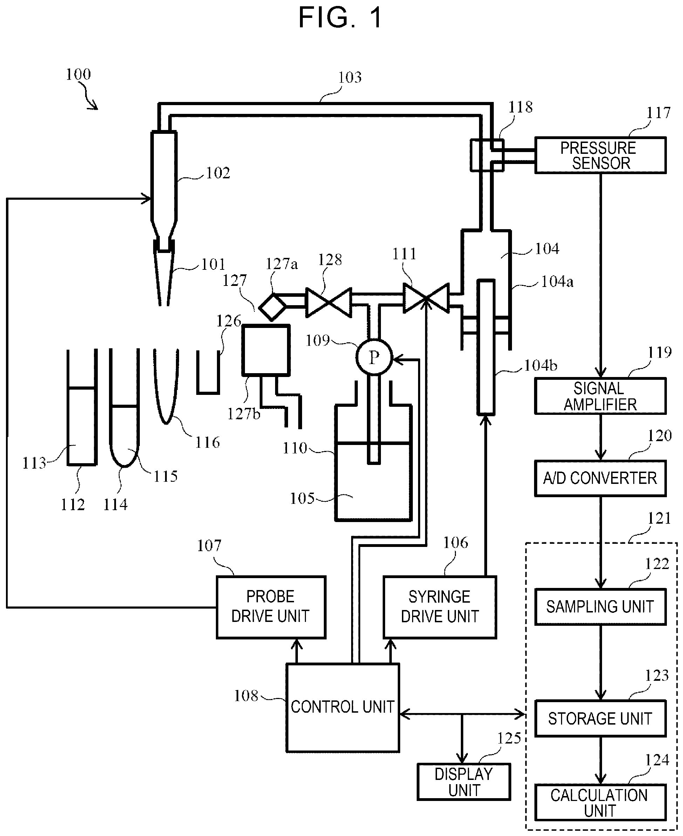

FIG. 1 is a schematic configuration diagram showing a dispensing mechanism 100 of an automatic analyzer according to the first embodiment. As shown in FIG. 1, the dispensing mechanism 100 includes a tip 101, a probe 102, a flow path 103, a syringe 104 (pressure source), a syringe drive unit 106, a probe drive unit 107, a control unit 108, a water supply pump 109, a water supply tank 110 that stores cleaning water 105, a solenoid valve 111, a reagent container 112 (container) that stores a reagent 113 (fluid) corresponding to an analysis item, a specimen container 114 (container) that stores a specimen 115 (fluid), a reaction container 116, a pressure sensor 117, a branch block 118, a signal amplifier 119, an A/D converter 120, a determination unit 121 (including a sampling unit 122, a storage unit 123, and a calculation unit 124), a display unit 125, a tip disposal unit 126, a cleaning tank 127, and a solenoid valve 128.

The tip 101 (dispensing nozzle) can be attached to and detached from a tip end of the probe 102. The probe drive unit 107 such as a motor or an actuator (not shown) is connected to the probe 102, whereby the probe 102 can be moved in horizontal and vertical directions and moved to a predetermined position. The tip 101 is held in, for example, a tip rack (not shown), and the probe drive unit 107 moves the probe 102 above the tip rack and lowers the probe 102, whereby the tip 101 can be mounted on the probe 102. The tip 101 may be attached to the probe 102 in a tip buffer that temporarily holds the tip 101.

The probe 102 is connected to the syringe 104 via the flow path 103, and the inside thereof is filled with the cleaning water 105. The syringe 104 includes a cylinder 104a and a plunger 104b, and the plunger 104b is connected to the syringe drive unit 106. The syringe drive unit 106 drives the plunger 104b with respect to the cylinder 104a in an upper-lower direction, whereby the tip 101 connected to the probe 102 aspirates and discharges a fluid (liquid and gas). In particular, the probe 102 can dispense the reagent 113 in the reagent container 112 and the specimen 115 in the specimen container 114.

The syringe 104 includes a flow path communicating with the water supply tank 110, and the flow path is provided with the solenoid valve 111 and the water supply pump 109. The cleaning water 105 is stored in the water supply tank 110, and the inside of the probe 102 can be cleaned by discharging the cleaning water 105 from the probe 102 by driving the water supply pump 109. The probe 102 is cleaned, for example, before dispensing the reagent 113 and the specimen 115.

Although not shown, the automatic analyzer includes a reagent storage that holds the reagent container 112, a specimen container rack that holds the specimen container 114, and a reaction disk that holds the reaction container 116. Holding devices of the reagent container 112, the specimen container 114, and the reaction container 116 are not limited to the above. The reagent 113 and the specimen 115 that are aspirated into the tip 101 are dispensed into the reaction container 116.

The control unit 108 controls operations of the syringe drive unit 106, the probe drive unit 107, the water supply pump 109, and the solenoid valve 111. The control unit 108 may control not only the operation of each component of the dispensing mechanism 100 but also the operation of the entire automatic analyzer.

The pressure sensor 117 is connected to the branch block 118 provided in the middle of the flow path 103, and measures time-series data on the pressure in the flow path 103. The pressure sensor 117 outputs a pressure detection signal to the signal amplifier 119. A position of the pressure sensor 117 may be on the syringe 104 side as shown in Fig. 1. However, by connecting the pressure sensor 117 to a position as close as possible to the probe 102, a pressure fluctuation of an open portion of the tip 101 can be measured with high sensitivity.

The signal amplifier 119 amplifies a detection signal of the pressure sensor 117 and outputs the amplified signal to the A/D converter 120. The A/D converter 120 converts the amplified signal into a digital signal and outputs the digital signal to the determination unit 121 as a pressure value.

The determination unit 121 is a circuit that determines the presence or absence of an abnormality during a dispensing operation of the dispensing mechanism 100. The determination unit 121 includes the sampling unit 122 that receives an input of the pressure value from the A/D converter 120, the storage unit 123 that stores data such as the pressure value input to the sampling unit 122, and the calculation unit 124 that executes processing on the data stored in the storage unit 123.

The determination unit 121 can communicate with the control unit 108, and transmits the content of a stop operation to the control unit 108 when it is determined based on a result of data processing in the calculation unit 124 that the stop operation of the operation is desirable.

The determination unit 121 may be implemented as hardware in the automatic analyzer as a dedicated circuit board, or a processor may function as the determination unit 121 by reading and executing a program recorded in the storage unit 123. Further, the processor in a server communicably connected to the automatic analyzer in a wireless or wired manner may read and execute the program and function as the determination unit 121.

The display unit 125 is connected to the control unit 108 and the determination unit 121, and displays the result of the data processing in the determination unit 121, information related to the result, and the like.

The tip 101 in which the dispensing of the reagent 113 and the specimen 115 into the reaction container 116 is completed is discarded in the tip disposal unit 126.

The cleaning tank 127 includes a cleaning nozzle 127a and a drain cup 127b, and an outer wall of the tip 101 can be cleaned by the cleaning nozzle 127a. The cleaning water 105 for cleaning the outer wall of the tip 101 is discharged from the cleaning nozzle 127a through the solenoid valve 128.

### <Dispensing Method>

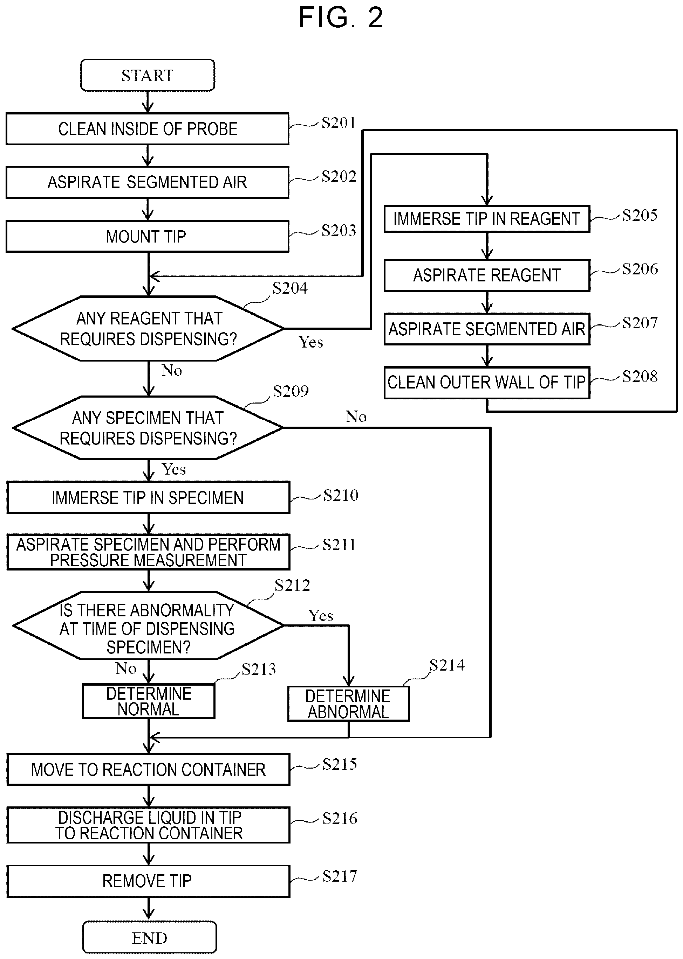

FIG. 2 is a flowchart showing a dispensing method according to the first embodiment, and particularly shows a fluid dispensing method using the automatic analyzer. The dispensing method according to the present embodiment is executed by the automatic analyzer, and is actually executed by the control unit 108 shown in FIG. 1 controlling the operation of each component (the syringe drive unit 106, the probe drive unit 107, the water supply pump 109, the solenoid valve 111, and the like) of the dispensing mechanism 100. In the following, each component of the dispensing mechanism 100 may be described as a subject of the operation.

In step S201, the control unit 108 opens the solenoid valve 111, drives the water supply pump 109, and discharges the cleaning water 105 in the water supply tank 110 from the probe 102. Accordingly, the inside of the probe 102 is cleaned.

In step S202, the syringe drive unit 106 drives the syringe 104 to aspirate a segmented air into the probe 102. This is to prevent the cleaning water 105 filling the inside of the probe 102 from being mixed with the reagent 113 to be aspirated in the next step.

In step S203, the probe drive unit 107 mounts the tip 101 on the tip end of the probe 102 by moving the probe 102 above the tip rack or the tip buffer and then lowering the probe 102.

In step S204, it is determined whether there is a reagent that requires dispensing. When there is a reagent that requires dispensing (Yes), S205 to S208, which are steps of aspirating the reagent, are performed, and then the process returns to step S204. That is, the steps from S205 to S208 are repeatedly executed until the aspirating of all the reagents that requires dispensing is completed. For example, when there are two types of reagents that require aspirating and dispensing, the steps from S205 to S208 are repeated twice. When there is no reagent that requires dispensing (No), the steps from S205 to S208 are not performed.

In step S205, the probe drive unit 107 moves the probe 102 above the reagent container 112, and lowers the probe 102 until a tip end of the tip 101 is immersed in the reagent 113.

In step S206, the syringe drive unit 106 drives the syringe 104 to aspirate the reagent 113 into the tip 101. Thereafter, the probe drive unit 107 raises the probe 102 until the tip end of the tip 101 comes out from the reagent 113.

In step S207, the syringe drive unit 106 drives the syringe 104 to aspirate the segmented air into the tip 101. This is to prevent the reagent 113 previously aspirated into the tip 101 from being mixed with the liquid aspirated in the next step.

In step S208, the control unit 108 opens the solenoid valve 128 and drives the water supply pump 109 to discharge the cleaning water 105 in the water supply tank 110 from the cleaning nozzle 127a. Thus, the outer wall of the tip 101 is cleaned. This is to prevent the reagent 113 previously aspirated into the tip 101 from being mixed with the liquid aspirated in the next step.

As described above, the steps from S205 to S208 may be repeated a plurality of times, and the dispensing mechanism 100 can perform a step of aspirating air (step S207) a plurality of times until the fluid (the reagent 113 and/or the specimen 115) is aspirated and discharged into the probe 102. Accordingly, it is possible to prevent many kinds of fluids from being mixed.

In step S209, it is determined whether there is a specimen that requires dispensing. When there is a specimen that requires dispensing (Yes), S210 to S214, which are steps of aspirating the specimen, are performed. When there is no specimen that requires dispensing (No), the steps from S210 to S214 are not performed.

In step S210, the probe drive unit 107 moves the probe 102 above the specimen container 114, and lowers the probe 102 until the tip end of the tip 101 is immersed in the specimen 115.

In step S211, the syringe drive unit 106 drives the syringe 104 to aspirate the specimen 115 into the tip 101. Here, the sampling unit 122 of the determination unit 121 receives an input of a pressure value during an aspiration operation of the specimen 115, and transmits, in the storage unit 123, the pressure value during the aspiration operation of the specimen 115 as time-series data (hereinafter, may be referred to as a "pressure history"). The storage unit 123 stores the pressure value.

For example, the pressure value is measured in a time zone before the start of the aspiration operation, a time zone during the aspiration operation, and a time zone after the end of the aspiration operation. Pressure may be measured at a plurality of time points in each time zone. Thereafter, the probe drive unit 107 raises the probe 102 until the tip end of the tip 101 comes out from the specimen 115.

In step S212, the calculation unit 124 of the determination unit 121 determines whether there is an abnormality such as clogging, bubble aspiration, or the like at the time of aspirating of the specimen 115 based on the pressure history at the time of specimen aspiration stored in the storage unit 123 (detects an abnormality). That is, based on the pressure history, it is determined whether the specimen to be analyzed is normally dispensed.

The pressure history when an abnormality such as bubble aspiration or clogging occurs at the time of aspirating of the specimen 115 is significantly different from the pressure history when normal dispensing is performed. Therefore, the presence or absence of the abnormality can be determined by referring to the pressure history. A method of determining the presence or absence of an abnormality will be described later.

In this step, the determination unit 121 transmits a determination result of the presence or absence of the abnormality to the display unit 125 and the control unit 108. The display unit 125 displays the determination result.

When it is determined in step S212 that there is no abnormality (No), the process proceeds to step S213. In step S213, the control unit 108 determines that the specimen 115 is normally aspirated based on the determination result received from the determination unit 121.

When it is determined in step S212 that there is an abnormality (Yes), the process proceeds to step S214. In step S214, the control unit 108 determines that there is an abnormality at the time of aspirating of the specimen 115 based on the determination result received from the determination unit 121. At this time, an alert is displayed on the display unit 125, and the dispensing operation of the corresponding specimen 115 is ended. The specimen 115 is returned to a user. In this way, by stopping the dispensing of the specimen 115 having an abnormality, the consumption of the reagent used for the subsequent analysis can be reduced.

In the example of FIG. 2, the process proceeds to step S215 after step S214, but as a modification, a predetermined error process or the like may be executed after step S214, and in this case, other process may be executed instead of step S215 and subsequent steps.

In step S215, the probe 102 is moved so that the tip end of the tip 101 is positioned inside the reaction container 116.

In step S216, the syringe drive unit 106 drives the syringe 104 to discharge the liquid that is held in the tip 101 into the reaction container 116. At this time, all the reagents and specimens aspirated into the tip 101 are simultaneously discharged into the reaction container 116.

In step S217, the probe drive unit 107 moves the probe 102 to the tip disposal unit 126, and removes the tip 101 from the probe 102 by discarding the tip 101 in the tip disposal unit 126.

### <Method of Determining Presence or Absence of Abnormality>

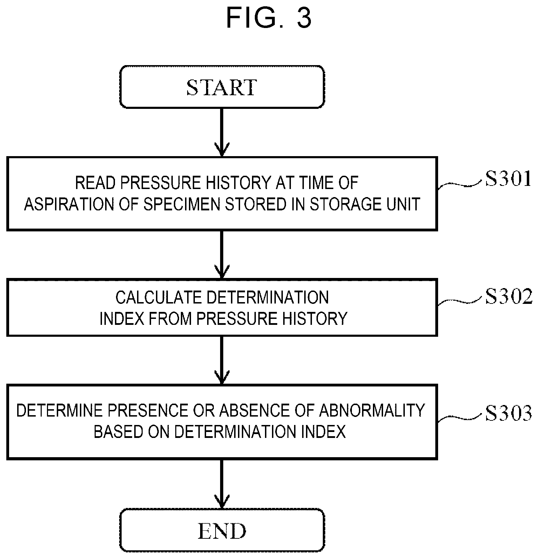

FIG. 3 is a flowchart showing a method of determining the presence or absence of an abnormality by the determination unit 121 in step S212 of FIG. 2.

In step S301, the calculation unit 124 reads the pressure history at the time of aspirating of the specimen stored in the storage unit 123. In the present description, the "pressure history at the time of aspirating of the specimen" refers to a pressure value in a predetermined time range including the operation time (aspiration operation time) of the syringe 104 when the specimen 115 is aspirated in step S211.

In step S302, the calculation unit 124 calculates a determination index used for determining the presence or absence of an abnormality based on the pressure history at the time of aspirating of the specimen. The "determination index" includes, for example, at least one of the following values:
- an average value of pressure values during the aspiration operation of the specimen 115.
- an average value of pressure values in a predetermined time immediately before the start of the aspiration operation of the specimen 115.
- an average value of pressure values in a predetermined time immediately after the end of the aspiration operation of the specimen 115.
- the maximum value of pressure values during the aspiration operation of the specimen 115.
- the minimum value of the pressure values during the aspiration operation of the specimen 115.
- a pressure pulsation period of a pressure history related to a plurality of aspiration operations.
- a pressure pulsation amplitude of pressure history related to a plurality of aspiration operations.
- a distance between a preset reference pressure history and a pressure history acquired in this step. The distance may be a statistical distance, or may be a Euclidean distance as a specific example. The Euclidean distance between the pressure history {a₁, a₂, a₃, ..., aₙ} and the pressure history {b₁, b₂, b₃, ..., bₙ} can be expressed by √ {Σ (aᵢ to bᵢ)²} (1 ≤ i ≤ n).

The "reference pressure history" is set based on, for example, a large number of pressure values acquired in the past, and may be a pressure value when it is determined that the specimen is normally aspirated (in this case, for example, when the statistical distance is larger than a determination threshold, it is determined that there is an abnormality), or may be a pressure value when it is determined that there is an abnormality at the time of aspirating of the specimen (in this case, for example, when the statistical distance is smaller than the determination threshold, it is determined that there is an abnormality).

The reference pressure history may be determined based on the pressure value at the time of aspirating of the segmented air by measuring the pressure at the time of aspirating of the segmented air immediately before the aspiration of the specimen. That is, the pressure history at the time of aspirating of air may be used to determine whether the specimen to be analyzed is normally dispensed (in this case, for example, when the statistical distance is smaller than the determination threshold, it is determined that there is an abnormality). In this way, it is possible to make a determination that is not easily affected by a temporal change in the state of the flow path.

A statistical distance (that is, the degree of similarity or dissimilarity) from the reference pressure history can also be used as the determination index. When the pressure at the time of aspirating of the segmented air immediately before the aspiration of the specimen is measured and the presence or absence of an abnormality is determined with reference to the pressure value at the time of aspirating of the segmented air, it is preferable to set an aspiration speed at the time of aspirating of the segmented air immediately before the aspiration of the specimen to be the same as an aspiration speed at the time of aspirating of the specimen. In addition, the plurality of indexes described above may be combined and used as the determination index.

In the present description, the "aspiration speed" can be represented by a moving speed of a specific member (for example, the plunger 104b of the syringe 104) or a moving speed of an aspirated fluid in a specific flow path, for example, in units of m/s. Alternatively, the aspiration speed can be represented by a flow rate of the aspirated fluid, for example, in units of m³/s. Other flow velocities, flow rates, and the like can also be used. The conversion of these physical quantities can be appropriately executed by the control unit 108, for example.

In the present embodiment, as the determination index, a difference between the average value of the pressure values during the aspiration operation of the specimen 115 and the average value of the pressure values in a predetermined time before the start of the aspiration operation is calculated, and it is determined whether the dispensing is normal or the bubble aspiration is performed using the difference. For example, in a case where the difference is smaller than a predetermined threshold, it is determined that bubble aspiration is performed. As a cause of the bubble aspiration, erroneous detection of a liquid surface due to air bubbles unintentionally generated by handling of the specimen container 114, or the like is considered. The bubbles are generated when the blood specimen 115 is shaken while being transported.

In step S303, the calculation unit 124 determines the presence or absence of an abnormality at the time of aspirating of the specimen 115 based on the determination index. Examples of the method of determining the presence or absence of an abnormality include a method of comparing the determination index with a preset determination threshold, and a method of determining an abnormality when a combination of a plurality of determination indexes satisfies a certain condition in addition to the above-described methods. In the present embodiment, an algorithm of comparing a constant determination threshold with the determination index and determining the presence or absence of an abnormality is used. The determination threshold used for determining the presence or absence of an abnormality is stored in the storage unit 123 in advance.

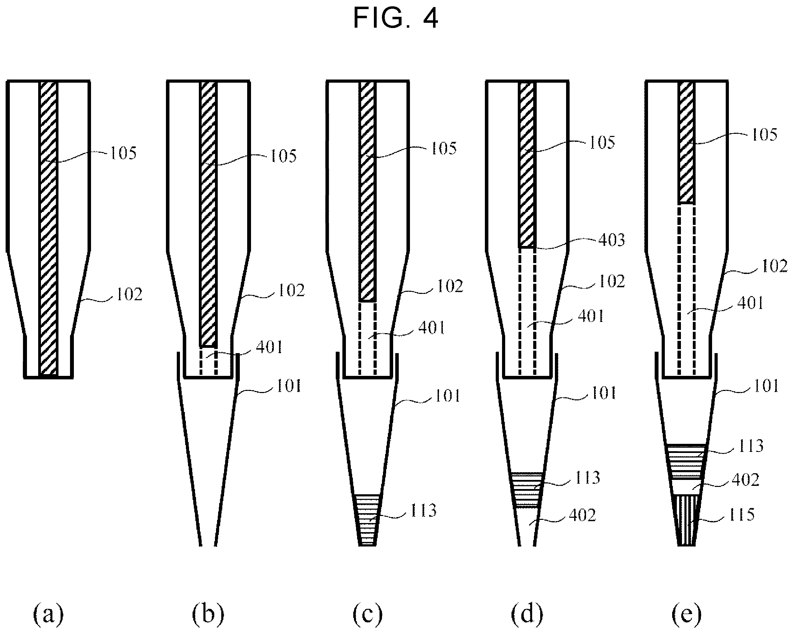

FIG. 4 is a schematic diagram showing a state of a fluid in the probe 102 and the tip 101 in the dispensing operation shown in FIG. 2. FIG. 4 shows a case where one type of reagent and one type of specimen are dispensed. (a) of FIG. 4 shows a state immediately after the inside of the probe 102 is cleaned with the cleaning water 105 in step S201. As shown in (a) of FIG. 4, the inside of the probe 102 is filled with the cleaning water 105.

(b) of FIG. 4 shows a state after a segmented air 401 is aspirated in step S202 and the tip 101 is mounted in step S203.

(c) of FIG. 4 shows a state after the reagent 113 is aspirated in step S206. The reagent 113 is located at the tip end of the tip 101.

(d) of FIG. 4 shows a state in which a segmented air 402 is aspirated in step S207. The segmented air 402 is located at the tip end of the tip 101, and the reagent 113 is located above the segmented air 402. (d) of Fig. 4 shows a state in which one type of reagent 113 is aspirated. When the plurality of reagents are dispensed, the reagents 113 and the segmented air 402 are alternately arranged by the number of aspirated reagents.

(e) of Fig. 4 shows a state in which the specimen 115 is aspirated in step S211. The specimen 115 is located at the tip end of the tip 101, the segmented air 402 is located above the specimen 115, and the reagent 113 is located on the segmented air 402.

As described above, the presence or absence of an abnormality is determined using the pressure history at the time of aspirating of the specimen 115. Before aspirating the specimen 115, an aspiration step of the reagent 113, the segmented air 401, the segmented air 402, and the like is performed. For example, a boundary 403 between the cleaning water 105 and the segmented air 401 moves upward in all of the aspiration steps of the reagent 113, the segmented air 401, and the segmented air 402.

When the boundary 403 moves, a part of the cleaning water 105 may adhere to and remain on an inner wall of the probe 102, and a liquid film may be generated on the inner wall of the probe 102. By reducing the occurrence of such a liquid film, it is possible to prevent the occurrence of liquid residue of the cleaning water 105 below the boundary 403, and to uniformly maintain a state before the aspiration of the specimen 115 ((d) of FIG. 4). Accordingly, by improving the reproducibility of the pressure history at the time of aspirating of the specimen 115, the presence or absence of an abnormality at the time of aspirating of the specimen 115 can be determined with high accuracy.

An example of a physical equation representing a thickness d of the liquid film generated when the boundary 403 moves is the following equation (1).$d ∝ D \times {\left(μv/σ\right)}^{2 / 3}$ equation (1) Here, D represents a flow path diameter, µ represents a viscosity of the fluid, v represents an aspiration speed, σ represents the surface tension of the fluid, and ∝ represents a proportional relation. A liquid residue amount of the cleaning water 105 remaining below the boundary 403 is a value obtained by multiplying the equation (1) by a movement distance of the boundary 403.

In order to reduce the liquid residue amount of the cleaning water 105, it is effective to reduce the aspiration speed. Specifically, it is effective to reduce the aspiration speed in the aspiration steps of the reagent 113, the segmented air 401, and the segmented air 402. However, reducing the aspiration speed in the aspiration step increases the time required for dispensing.

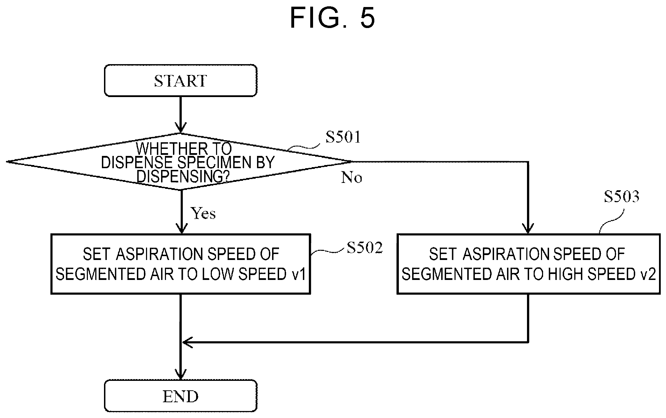

In the present embodiment, step S202, which is a process of aspirating the segmented air, is taken as an example, and a method of reducing the aspiration speed in this process will be described. FIG. 5 is a flowchart showing a method of setting an aspiration speed in step S202.

In step S501, it is determined whether to dispense the specimen in the dispensing. When the specimen is dispensed (Yes), it is desirable to improve the reproducibility of the pressure history at the time of aspirating of the specimen 115 to determine an abnormality at the time of aspirating of the specimen 115 with high accuracy, and thus it is desirable to prevent the occurrence of the liquid residue of the cleaning water 105. Therefore, it is desirable to reduce the aspiration speed in step S202, and the aspiration speed is set to a low speed v1 (step S502). In this case, steps S210 to S214 are performed in the process of FIG. 2.

On the other hand, when the specimen is not dispensed (No), it is not necessary to determine the presence or absence of an abnormality at the time of aspirating of the specimen 115, and thus the aspiration speed is set to a high speed v2 (step S503). That is, v2 > v1. In this case, steps S210 to S214 are not performed in the process of FIG. 2.

As described above, the dispensing mechanism 100 has a plurality of levels, that is, v1 (first level) and v2 (second level) as levels of aspiration speed for aspirating air at the time of aspirating of air into the probe 102 (or the tip 101 attached to the tip end of the probe 102).

In the above description, the aspiration speed in step S202 is changed according to whether the specimen is dispensed in the dispensing. That is, the dispensing mechanism 100 selectively uses the plurality of levels v1 and v2 according to the type of fluid to be aspirated, particularly according to whether the fluid to be aspirated includes a specimen to be analyzed. Accordingly, when the specimen 115 is dispensed, the presence or absence of an abnormality at the time of aspirating is determined with high accuracy, and it is possible to prevent the time required for dispensing from becoming longer when the specimen 115 is not dispensed. Changing a speed of the aspiration step according to the presence or absence of specimen dispensing can be also applied to the aspiration step of any of the reagent 113, the segmented air 401, and the segmented air 402.

### <Technical Effect>

As described above, the automatic analyzer according to the present embodiment changes the aspiration speed in the aspiration step of the segmented air or a reagent according to the presence or absence of specimen dispensing. When the specimen is dispensed, the occurrence of a liquid film generated in the flow path before the aspiration of the specimen is prevented by reducing the aspiration speed in the aspiration step of the segmented air or the reagent, and the presence or absence of an abnormality at the time of aspirating of the specimen can be determined with high accuracy by improving the reproducibility of the pressure history at the time of aspirating of the specimen.

In addition, by reducing the aspiration speed only when there is specimen dispensing, it is possible to minimize an increase in the time required for dispensing and maximize the number of analytes that can be processed per unit time.

The configuration of the present embodiment is particularly effective in a case where a plurality of aspiration steps are performed before the aspiration of a specimen, such as aspirating the specimen after aspirating the segmented air or a reagent. In a case where the plurality of aspiration steps are performed before the aspiration of a specimen, it is possible to determine the presence or absence of an abnormality at the time of aspirating of the specimen with high accuracy by preventing the generation of a liquid film in all steps.

### <Modification 1 of First Embodiment>

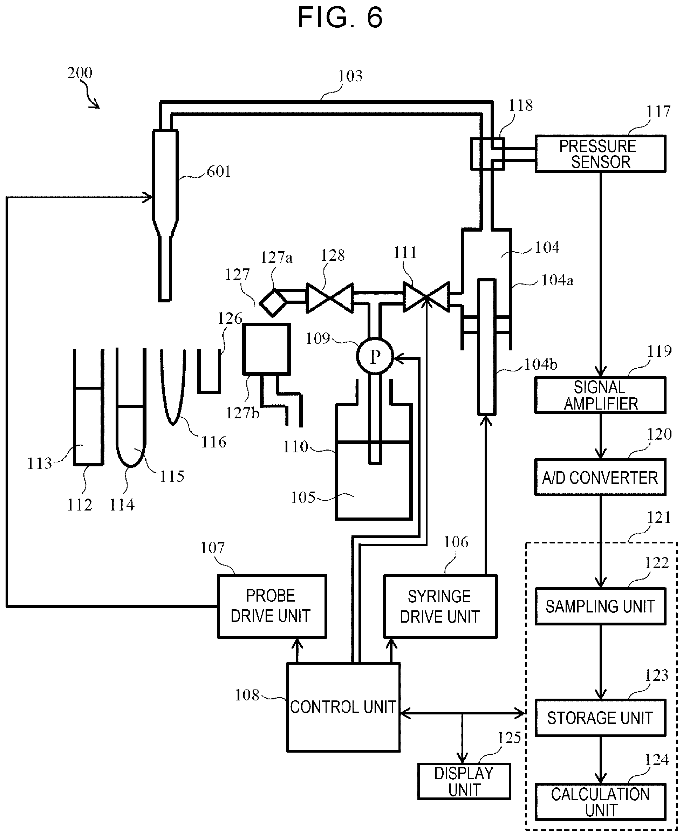

FIG. 6 is a schematic configuration diagram showing a dispensing mechanism 200 of an automatic analyzer according to a modification of the first embodiment. As shown in FIG. 6, the dispensing mechanism 200 includes a probe 601 (dispensing nozzle) instead of the tip 101 and the probe 102 shown in FIG. 1. Since the configuration other than the probe 601 is the same as that of the dispensing mechanism 100 according to the first embodiment, the description thereof will be omitted.

In the present modification, step S203 and step S217 are omitted in the flowchart of FIG. 2, and the tip is replaced with a probe. In FIG. 4, the tip 101 and the probe 102 are coupled and replaced with the probe 601.

### <Modification 2 of First Embodiment>

The abnormality determination in the dispensing of the specimen may be omitted. For example, steps S212 to S214 may be omitted without performing pressure measurement in step S211. Further, the pressure sensor 117, the signal amplifier 119, the A/D converter 120, the determination unit 121, and the like may be omitted.

### [Second Embodiment]

In the first embodiment, in step S501, the aspiration speed in step S202 is changed depending on whether the specimen is dispensed in the dispensing. In the present embodiment, the aspiration speed of the segmented air in the aspiration step is changed according to an aspiration volume of the segmented air.

As described in the first embodiment, the liquid residue amount of the cleaning water 105 remaining below the boundary 403 is a value obtained by multiplying the equation (1) by the movement distance of the boundary 403. The movement distance of the boundary 403 is long in a process in which the aspiration volume is large.

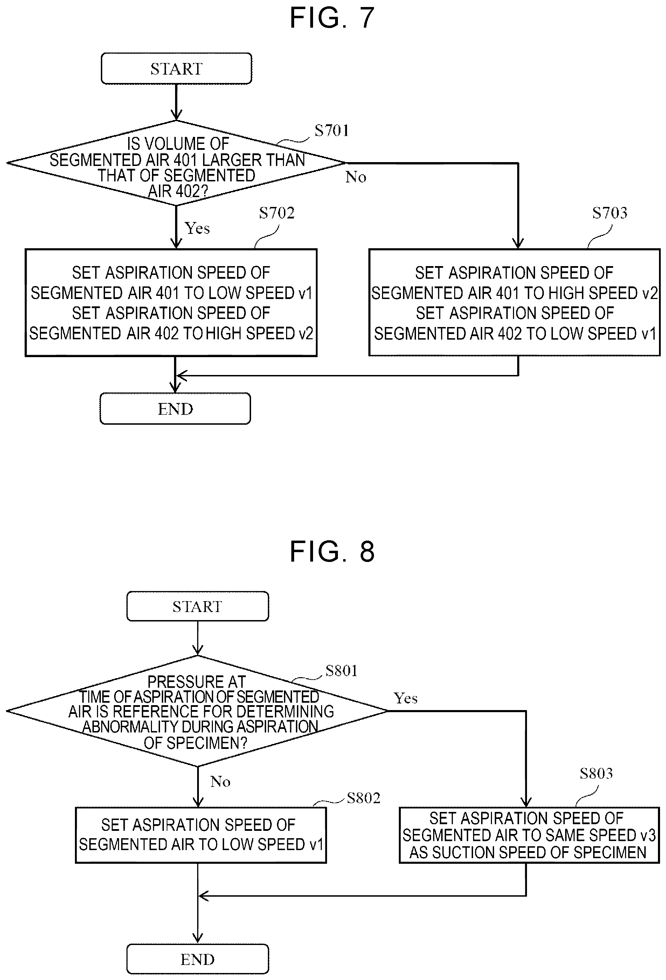

In the present embodiment, an aspiration step of the segmented air 401 and the segmented air 402 is taken as an example, and a method of changing the aspiration speed according to the magnitude of the aspiration volume of the segmented air will be described. FIG. 7 is a flowchart showing a method of setting an aspiration speed of each of the segmented air 401 and the segmented air 402 in the aspiration step.

In step S701, a volume of the segmented air 401 and a volume of the segmented air 402 are compared. When the volume of the segmented air 401 is larger (Yes), since the liquid residue of the cleaning water 105 is likely to occur in the aspiration step of the segmented air 401, an aspiration speed of the segmented air 401 is set to the low speed v1, and an aspiration speed of the segmented air 402 is set to the high speed v2 (step S702). That is, v2 > v1.

On the other hand, when the volume of the segmented air 401 is smaller (No), since the liquid residue of the cleaning water 105 is likely to occur in the aspiration step of the segmented air 402, the aspiration speed of the segmented air 401 is set to the high speed v2, and the aspiration speed of the segmented air 402 is set to the low speed v1 (step S703).

In this way, the dispensing mechanism 100 selectively uses the plurality of levels v1 and v2 according to the aspiration volume of air. In particular, the level v1 of the small aspiration speed is used when the aspiration volume of air is large, and the level v2 of the large aspiration speed is used when the aspiration volume of air is small.

More specifically, in the processing flow of aspirating the air of a first volume and the air of a second volume, when the first volume is larger than the second volume, the low speed v1 is used for aspirating the air of the first volume and the high speed v2 is used for aspirating the air of the second volume, and when the second volume is larger than the first volume, the low speed v1 is used for aspirating the air of the second volume and the high speed v2 is used for aspirating the air of the first volume.

In the above description, by changing the aspiration speed of each of the segmented air 401 and the segmented air 402 in the aspiration step according to the aspiration volume of each analysis air, the presence or absence of an abnormality at the time of aspirating of the specimen 115 is determined with high accuracy. By slowing down only a step having a large aspiration volume, it is possible to minimize an increase in the time required for dispensing and maximize the number of analytes that can be processed per unit time.

In the present embodiment, the segmented air is exemplified, and the aspiration speed is set according to the aspiration volume. As a modification, a configuration in which the aspiration speed is set according to the aspiration volume of the reagent can also be changed.

The first embodiment and the second embodiment may be combined for different levels. For example, a plurality of levels may be selectively used according to both the type of fluid and the aspiration volume of air.

### [Third Embodiment]

In the present embodiment, the aspiration speed of the segmented air in the aspiration step is changed according to the purpose of aspirating the segmented air.

In the present embodiment, a method of changing the aspiration speed according to whether the pressure in the aspiration step of the segmented air serves as a reference for determining an abnormality in specimen aspiration will be described. FIG. 8 is a flowchart showing a method of setting an aspiration speed of the segmented air in the aspiration step.

In the present embodiment, the dispensing mechanism 100 has a plurality of levels, that is, v1 and v3, as the level of the aspiration speed at which air is aspirated into the probe 102 (or into the tip 101 attached to the tip end of the probe 102). v3 > v1, and v3 is the same as the aspiration speed at the time of aspirating of the specimen. The magnitude relation between v2 and v3 is optional, and v2 may be equal to v3.

In step S801, it is determined whether the pressure at the time of aspirating of the segmented air serves as a reference for determining an abnormality in specimen aspiration. This can be determined based on, for example, preset operation parameters of the automatic analyzer.

When the pressure at the time of aspirating of the segmented air does not serve as a reference for determining an abnormality in specimen aspiration (No), the aspiration speed of the segmented air 401 is set to the low speed v1 in order to prevent the liquid residue of the cleaning water 105 from occurring (step S802). That is, when the pressure history at the time of aspirating of the air is used for determining whether the specimen to be analyzed has been dispensed normally, v1 of the plurality of levels v1 and v3 is used.

On the other hand, when the pressure at the time of aspirating of the segmented air serves as a reference for determining an abnormality in specimen aspiration (Yes), since it is preferable to set the aspiration speed of the segmented air to be the same as the aspiration speed at the time of aspirating of the specimen, the aspiration speed of the segmented air is set to a high speed v3 (step S803).

In this way, when the time-series data at the time of aspirating of the air is not used for determining whether the specimen to be analyzed is normally dispensed, v3 among the plurality of levels v1 and v3 is used.

In the above description, the presence or absence of an abnormality at the time of aspirating of the specimen 115 is determined with high accuracy by changing the aspiration speed according to whether the pressure of the segmented air in the aspiration step serves as a reference for determining an abnormality in specimen aspiration. By setting the aspiration speed of the segmented air aspiration, which is a reference for determining an abnormality in specimen aspiration, to be the same as the aspiration speed of the specimen, a reference suitable for determining the abnormality can be adopted. Further, by reducing the speed of the aspiration step of the other segmented air, it is possible to prevent the generation of the liquid film and determine the presence or absence of an abnormality at the time of aspirating of the specimen with high accuracy.

### [Fourth Embodiment]

In the present embodiment, a value of the low speed v1 in the first to third embodiments is changed according to a diameter and material of a flow path. In particular, the value of the low speed v1 in FIGS. 5, 7, and 8 is changed according to the diameter and material of the flow path where the boundary 403 is located.

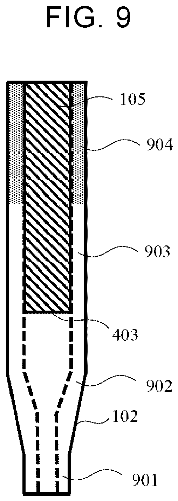

FIG. 9 is a schematic view showing a state of a fluid in the probe 102. In the present embodiment, a flow path in the probe 102 includes a flow path 901 having a small diameter, a tapered portion 902, a flow path 903 having a large diameter, and a flow path 904 having a flow path material different from those of the flow paths 901 to 903.

When the boundary 403 is located in the flow path 901 having a small diameter, a flow velocity v in a pipeline increases and liquid residue is likely to occur, and thus it is desirable to set the value of the low speed v1 to be smaller than that when the boundary 403 is located in the tapered portion 902 or the flow path 903. On the other hand, when the boundary 403 is located in the flow path 903 having a large diameter, the flow velocity v in the pipeline becomes small and liquid residue is less likely to occur, and thus it is desirable to set the value of the low speed v1 to be larger than that when the boundary 403 is located in the flow path 901 or the tapered portion 902 (however, within a range of v1 < v2).

In addition, in a case where the flow path 903 and the flow path 904 have the same shape and liquid residue is likely to occur in the flow path 904, when the boundary 403 is located in the flow path 904, it is desirable to set the value of the low speed v1 to be smaller than that when the boundary 403 is located in the flow path 903.

### [Modifications]

The present disclosure is not limited to the above-described embodiments, and includes various modifications. For example, by using the configurations of the first to fourth embodiments and the modifications thereof in combination with each other, the presence or absence of an abnormality at the time of aspirating of the specimen can be more effectively increased with high accuracy.

For example, the above embodiments are described in detail to facilitate understanding of the present disclosure, and it is unnecessary to include all the configurations described above. A part according to one embodiment may be replaced with a configuration according to another embodiment. A configuration of another embodiment can be added to a configuration of one embodiment. A part of a configuration of each embodiment can be added, deleted, or replaced with a part of a configuration of another embodiment.

The dispensing method according to each embodiment described above can be executed not only in the automatic analyzer but also in other devices having a fluid dispensing mechanism. For example, the method of each embodiment can also be applied to a medicine manufacturing apparatus, a microreactor, or the like.

### Reference Signs List

100: dispensing mechanism
101: tip
102: probe
103: flow path
104: syringe (pressure source)
104a: cylinder
104b: plunger
105: cleaning water
106: syringe drive unit
107: probe drive unit
108: control unit
109: water supply pump
110: water supply tank
111: solenoid valve
112: reagent container
113: reagent (fluid)
114: specimen container (container)
115: specimen (fluid)
116: reaction container (container)
117: pressure sensor
118: branch block
119: signal amplifier
120: A/D converter
121: determination unit
122: sampling unit
123: storage unit
124: calculation unit
125: display unit
126: tip disposal unit
127: cleaning tank
127a: cleaning nozzle
127b: drain cup
128: solenoid valve
200: dispensing mechanism
401: segmented air
402: segmented air
403: boundary
601: probe
901: flow path
902: tapered portion
903: flow path
904: flow path

## Claims

1. An automatic analyzer comprising:
a container configured to contain a fluid;
a pressure source;
a probe configured to dispense the fluid in the container; and
a flow path connecting the probe and the pressure source, wherein
the automatic analyzer has a plurality of levels of an aspiration speed at which air is aspirated when the air is aspirated into the probe or when the air is aspirated into a tip attached to a tip end of the probe, and
the levels are selectively used according to at least one of a type of the fluid or an aspiration volume of the air.

2. The automatic analyzer according to claim 1, further comprising:
a pressure sensor configured to measure time-series data of pressure in the flow path; and
a storage unit configured to store the time-series data, wherein
the automatic analyzer determines whether the specimen to be analyzed is normally dispensed based on the time-series data.

3. The automatic analyzer according to claim 1, wherein
the levels are selectively used depending on whether the fluid contains a specimen to be analyzed.

4. The automatic analyzer according to claim 1, wherein
a low level of aspiration speed is used when the aspiration volume of the air is large.

5. The automatic analyzer according to claim 2, wherein
the time-series data at the time of aspirating of the air is used for the determination as to whether the specimen to be analyzed is normally dispensed.

6. The automatic analyzer according to claim 5, wherein
a first level among the levels is used when the time-series data at the time of aspirating of the air is used for the determination as to whether the specimen to be analyzed is normally dispensed, and
a second level different from the first level among the levels is used when the time-series data at the time of aspirating of the air is not used for the determination as to whether the specimen to be analyzed is normally dispensed.

7. The automatic analyzer according to claim 1, wherein
a step of aspirating the air is performed a plurality of times during a period from when the fluid is aspirated into the probe to when the fluid is discharged.

8. A fluid dispensing method using an automatic analyzer, wherein
the automatic analyzer includes
a container configured to contain a fluid,
a pressure source,
a probe configured to dispense the fluid in the container, and
a flow path connecting the probe and the pressure source,
the automatic analyzer has a plurality of levels of an aspiration speed at which air is aspirated when the air is aspirated into the probe or when the air is aspirated into a tip attached to a tip end of the probe, and
the dispensing method comprises selectively using the levels according to at least one of a type of the fluid and an aspiration volume of the air.
